# EUROPEAN PATENT SPECIFICATION

(11) **EP 2 716 404 B1**
(45) Date of publication and mention of the grant of the patent: **23.05.2018**
(21) Application number: 11866102.4
(22) Date of filing: 07.10.2011
(51) Int. Cl.: B23K 35/363, B23K 35/26, C22C 12/00, B23K 35/36, B23K 35/362, B23K 35/02, C08K 5/09, C08K 5/29, C08G 59/38, C08L 63/00, C08L 79/04

(54) **SOLDERING PASTE FLUX AND SOLDERING PASTE**
LÖTPASTENFLUSSMITTEL UND LÖTPASTE
FLUX DE PÂTE DE SOUDURE ET PÂTE DE SOUDURE

(30) Priority: 25.05.2011 JP 2011117076
(43) Date of publication of application: 09.04.2014
(73) Proprietor: Harima Chemicals, Inc., Kakogawa-shi, Hyogo 675-0019 (JP)
(72) Inventor: HAMAGAWA, Teruyoshi, Kakogawa-shi Hyogo 675-0019 (JP); KUKIMOTO, Yoichi, Kakogawa-shi Hyogo 675-0019 (JP); HASEGAWA, Taku, Kakogawa-shi Hyogo 675-0019 (JP); SAKURAI, Hitoshi, Kakogawa-shi Hyogo 675-0019 (JP)
(74) Representative: Hoffmann Eitle
(86) International application number: PCT/JP2011/073250
(87) International publication number: WO 2012/160722

(56) References cited:
- EP-A1- 0 381 468
- EP-A1- 1 728 585
- EP-A1- 1 914 035
- WO-A1-2006/009118
- WO-A2-2010/036953
- JP-A- 3 018 498
- JP-A- 2010 077 271
- US-A1- 2003 051 770

## Description

### TECHNICAL FIELD

The present invention relates to a soldering paste and a flux used for the same, and particularly to an improvement in a resin component for forming a cured resin film in a flux of a soldering paste.

### BACKGROUND ART

In mounting steps of electronic products, a soldering paste is often used in order to join a terminal of an electronic component to an electrode of a circuit board. Patent Document 1 discloses solder cream obtained by blending a flux containing a predetermined resinoid and a solder powder. In recent years, a solder joint portion increasingly becomes fine associated with downsizing and enhanced performance of electronic products. When such electronic components are subjected to impact due to falling or the like, the joint portion may be damaged with the load of external stress. Particularly, when the joint portion is finer, the effect of being subjected to impact is larger, and therefore there is a fear that joint reliability (joint strength) may be poor.

A reduction in an environmental load becomes a problem to be addressed in a production step in parallel with establishment of refinement technology. Examples of solutions to this problem include means such that power consumption is reduced (an amount of CO₂ emissions is reduced) by a low-temperature joining process using a low-temperature solder (for example, SnBi-type solders such as Sn-Bi and Sn-Bi-Ag).

However, mechanical strength in SnBi-type solders is not sufficient. Thus, when fine joint portions are formed by using SnBi-type solders, there is a possibility that joint strength may be poor not only when the joint portion is subject to impact, but also when a finished product is used under severe conditions. Thus, in order to improve joint strength, there is proposed a technique in which a soldering paste including a solder powder and thermosetting resins is used as a joining material. A joint portion where the soldering paste is used is thought to be improved in strength because a cured resin film is formed around a solder layer. Further, it is also thought to contribute to an improvement in strength that a gap formed between the electronic components and the circuit board is filled with the cured resin film to reinforce the adhesion between the electronic components and the circuit board. As such thermosetting resins, epoxy resins and cyanate esters are known (Patent Document 2 and Patent Document 3). Patent Document 4 relates to a solder paste comprising a solder alloy powder and a flux, characterized in that the solder alloy consists essentially of, in mass percent, 70 - 98% of Bi, a total of 0 - 0.5% of at least one substance selected from Ag, Cu, Sb, In, Zn, Ni, Cr, Fe, Mo, P, Ge, and Ga, and a remainder of Sn, and in that the flux comprises a bisphenol A epoxy resin and a curing agent selected from a dicarboxylic acid and a carboxylic anhydride.

### PRIOR ART DOCUMENTS

### PATENT DOCUMENTS

Patent Document 1: Japanese Unexamined Patent Publication No. 2-205296
Patent Document 2: Japanese Unexamined Patent Publication No. 2006-334669
Patent Document 3: Japanese Unexamined Patent Publication No. 2002-224885
Patent Document 4: EP 1 914 035 (A1)

### SUMMARY OF THE INVENTION

### PROBLEMS TO BE SOLVED BY THE INVENTION

The soldering paste described above needs to be held for a given length of time or more in a temperature region where curing of a resin progresses in soldering. However, it is not preferred from the viewpoint of productivity and thermal load on components or substrates to retain a state of heating in this way. Moreover, the retention of the heating state deviates from an inherent intention that a low-temperature solder is used for reducing an environmental burden.

On the other hand, it is known that a highly reactive resin or curing agent is used in order to shorten a heating-retention time, that is, to shorten a curing time. However, in a soldering paste containing a highly reactive resin or curing agent, reaction easily tends to progress during storage and it results in an increase in viscosity of a paste, and therefore storage stability is poor.

In addition to this, in recent years, an environment where a mounting board is placed is diversified. For example, in car-mounted boards, a mounting board is increasingly placed in a more severe environment where a temperature difference between cold and hot conditions is very large and heavy vibrations take place like the vicinity of an engine in an engine room. In such cases, the joint portion is required to have high durability. Specifically, it is required to have excellent crack resistance under the condition of temperature load in which the cooling /heating cycle of high-temperature and low-temperature is repeated.

It is an object of the present invention to provide a soldering paste in which storage stability is excellent, a resin is cured in a short time at low temperatures, and durability is high, and a flux to be used in the soldering paste.

### SOLUTIONS TO THE PROBLEMS

In order to solve the above-mentioned problems, the present inventors have made earnest investigations, and consequently found solving means including the following constitution. These findings have led to completion of the present invention as defined by the appended claims.

### EFFECTS OF THE INVENTION

In a soldering paste flux of one aspect of the present invention according to claim 1, (A) a thermosetting prepolymer, (B) a polyfunctional epoxy monomer or oligomer having three or more functional groups in a molecule, (C) a carboxylic acid having a melting point of 80 to 170°C, and (D) a cyanate ester having two or more cyanato groups in a molecule are used in combination. A soldering paste having excellent storage stability can be prepared by using the flux.

In a soldering paste of another aspect of the present invention according to claim 5, a solder metal powder and the above soldering paste flux are used in combination. The soldering paste has excellent storage stability. Moreover, by using the soldering paste, a resin can be adequately cured even when soldering is performed at low temperatures in a short time, and a cured resin layer after curing can have excellent durability.

### EMBODIMENTS OF THE INVENTION

The soldering paste flux includes:
(A) a thermosetting prepolymer (hereinafter, may be referred to as a "component A"),
(B) a polyfunctional epoxy monomer or oligomer having three or more functional groups in a molecule (hereinafter, may be referred to as a "component B"),
(C) a carboxylic acid having a melting point of 80 to 170°C (hereinafter, may be referred to as a "component C"),
(D) a cyanate ester having two or more cyanato groups in a molecule (hereinafter, may be referred to as a "component D"), and, if necessary,
(E) a curing agent (hereinafter, may be referred to as a "component E") and
(F) a dispersion medium for dissolving or dispersing the components A to E (hereinafter, may be referred to as a
"component F").

In addition, hereinafter, components contained in the soldering paste flux other than the component F is referred to as a "solid content".

The component A of the soldering paste flux contains a bifunctional epoxy prepolymer (bifunctional epoxy resin main agent) as a main component, or consists of only a bifunctional epoxy prepolymer. The component A preferably contains the bifunctional epoxy prepolymer in an amount of 15% by mass or more, and more preferably in an amount of 20% by mass or more from the viewpoint of heat resistance and workability of the soldering paste flux or a soldering paste using the soldering paste flux.

Examples of the bifunctional epoxy prepolymer include various glycidyl ether type epoxy prepolymers such as bisphenol A type, bisphenol F type, brominated bisphenol A type, hydrogenated bisphenol A type, bisphenol S type, bisphenol AF type, biphenyl type, naphthalene type and fluorene type epoxy prepolymers; glycidyl ester type epoxy prepolymers; glycidyl amine type epoxy prepolymers; and alicyclic epoxy prepolymers. Among these, bisphenol A type, bisphenol F type, bisphenol S type and naphthalene type epoxy prepolymers are particularly preferable.

The component A may contain not only the bifunctional epoxy prepolymer but also other thermosetting prepolymers such as a urethane prepolymer, an unsaturated polyester prepolymer, a phenol prepolymer, a radical polymerizable acrylic prepolymer and a maleimide prepolymer. These other thermosetting prepolymers may be used alone, or may be used in combination of two or more thereof.

The soldering paste flux further contains the component E for the purpose of accelerating a curing rate of the component A or increasing the hardness of the component A. Particularly, when the component A contains the epoxy prepolymer (epoxy resin main agent), the soldering paste flux contains a curing agent or curing accelerator for an epoxy prepolymer as the component E. As the curing agent or curing accelerator for an epoxy prepolymer, publicly known ones can be appropriately used. The curing agent may be used alone, or may be used in combination of two or more thereof.

As the curing agent or curing accelerator for an epoxy prepolymer, for example, imidazoles, polyamine, acid anhydride and other various curing agents or curing accelerators can be used.

Examples of the imidazoles include 2-phenyl-4,5-dihydroxymethylimidazole, 2-phenyl-4-methyl-5-hydroxymethylimidazole, 1-cyanoethyl-2-undecylimidazolium trimellitate, an epoxy-imidazole adduct, an epoxy-phenol-borate ester compound, 2-methylimidazole, 2-ethyl-4-methylimidazole, 2-heptadecylimidazole, and the like.

Examples of the polyamine include aliphatic amines such as diethylene triamine, triethylene tetramine and metaxylylene diamine; alicyclic amines such as isophoronediamine and 1,3-bis(aminomethyl)cyclohexane; aromatic amines such as diaminodiphenylmethane, m-phenylenediamine and diaminodiphenylsulfone; as well as dicyandiamide, organic acid dihydrazide, and the like. Further, the polyamine-type curing agent may be various modified products such as polyamide of a modified product of dimer acid, ketimine of a modified product of ketone, epoxy adduct of a modified product of epoxide, a modified product of thiourea, a Mannich-modified product and a modified product by Michael addition.

Examples of the acid anhydride include aromatic acid anhydrides such as phthalic anhydride, trimellitic anhydride and pyromellitic anhydride; and cyclic aliphatic acid anhydrides such as tetrahydrophthalic anhydride, methyltetrahydrophthalic anhydride, hexahydrophthalic anhydride, methyl endo methylene tetrahydrophthalic anhydride, dodecenyl succinic anhydride and trialkyl tetrahydrophthalic anhydride; and the like.

The curing agent (component E) is preferably a latent curing agent or a latent curing accelerator.

Specific examples of the curing agent or curing accelerator for an epoxy prepolymer include latent curing accelerators manufactured by Asahi Kasei E-materials Corporation (trade name Novacure HX-3721, HX-3722, HX-3088, HXA-3792); curing accelerators manufactured by Nippon Soda Co., Ltd. (trade name NIPA-2E4MZ, NIPA-2P4MZ, HIPA-2E4MZ, HIPA-2E4MZ, NIPA-2MZ, HIPA-2MZ, TEP-2MZ, TIC-188); imidazole-type curing accelerators manufactured by SHIKOKU CHEMICALS CORPORATION (trade name Curezol (registered trademark) 2PHZ-PW (2-phenyl-4,5-dihydroxymethylimidazole), Curezol 2P4MHZ-PW (2-phenyl-4-methyl-5-hydroxymethylimidazole); imidazole-type latent curing agents manufactured by SHIKOKU CHEMICALS CORPORATION (trade name C11Z-CNS (1-cyanoethyl-2-undecylimidazolium trimellitate), Cureduct P-050 (epoxy-imidazole adduct), Cureduct L-07N (epoxy-phenol-borate ester compound)); aliphatic polyamine-type curing agents manufactured by FUJI KASEI CO., LTD. (trade name FUJICURE (registered trademark) FXR-1020, FUJICURE FXR-1030, FUJICURE FXR-1050, FUJICURE FXR-1080); amine adduct-type curing agents manufactured by Ajinomoto Fine-Techno Co. , Inc. (trade name AJICURE PN-23, AJICURE MY-24, AJICURE PN-31, AJICURE PN-40); a hydrazide-type curing agent manufactured by Ajinomoto Fine-Techno Co., Inc. (trade name AJICURE VDH) ; curing agents (phenol aralkyl resin) manufactured by Air Water Inc. (trade name HE-100 series) ; cationic latent curing accelerators (aromatic sulfonium salt) manufactured by SANSHIN CHEMICAL INDUSTRY CO., LTD. (trade name San-Aid (registered trademark) SI-60L, San-Aid SI-80L, San-Aid SI-100L; as well as Fa type benzoxazine (e.g., trade name BF-BXZ, BS-BXZ, BA-BXZ, manufactured by Konishi Chemical Ind. Co., Ltd.), Pd type benzoxazine; and the like.

The content of the component E is not particularly limited, and can be appropriately set in accordance with a degree of crosslinking or a crosslinking rate required for the soldering paste using the soldering paste flux.

The component B of the soldering paste flux is not particularly limited as long as it is a polyfunctional epoxy monomer or oligomer having three or more functional groups in a molecule. Examples of the functional groups include a glycidyl group, an allyl group, a carboxyl group, and a hydroxyl group, and among these groups, a glycidyl group is preferred. Further, at least one of the three or more functional groups in the component B is a glycidyl group.

Since the component B has three or more functional groups in a molecule, a crosslinking reaction of the component B with the component A easily progresses, and therefore a cured resin layer with high crosslinking density is formed in a short time even under the heating condition at low temperatures. When the soldering paste flux does not include the component B, the cured resin layer with high crosslinking density is hardly formed when the heating condition of the soldering paste is set to low temperatures or a short time.

The component B preferably has a melting temperature or softening point of 70 to 125°C, and more preferably 90 to 125°C. When the component B has a melting temperature or softening point of lower than 70°C, an increase in viscosity or curing of the soldering paste easily occur during storage. Therefore, storage stability of the soldering paste tends to become poor. Conversely, when the component B has a melting temperature or softening point of higher than 125°C, a cured resin layer with high crosslinking density tends to be hardly formed when the heating condition of the soldering paste is set to low temperatures or a short time.

The storage temperature of the soldering paste flux or soldering paste is generally below freezing, and is much lower than the melting temperature or softening point of the component B. Therefore, the soldering paste flux and the soldering paste using the same hardly initiate a crosslinking reaction during storage, and can suppress an increase in viscosity or curing thereof during storage.

Specific examples of the component B include trifunctional epoxy monomers represented by the general formula (1): 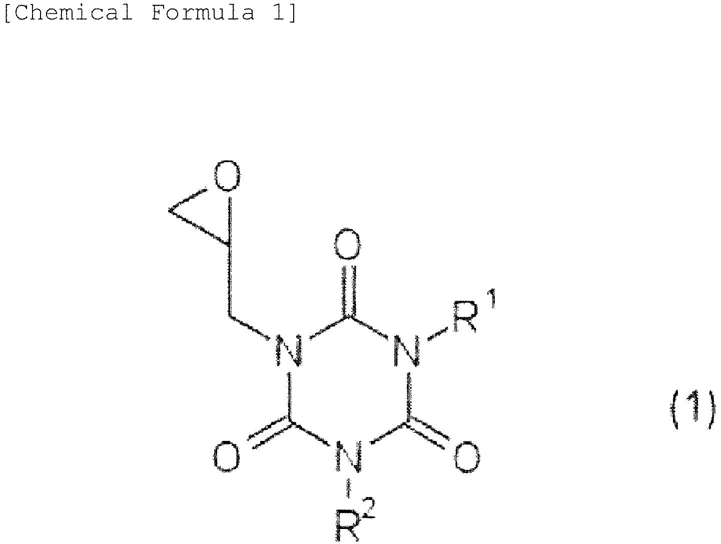 wherein R¹ and R² are the same or different from each other, and represent a glycidyl group, an allyl group, a carboxyalkyl group, or a hydroxyalkyl group. As illustrated in the general formula (1), an isocyanurate ester, in which a functional group such as a glycidyl group is introduced to each nitrogen atom of cyanuric acid, not only makes a crosslinked structure in the thermosetting prepolymer as the component A compact, but also suppress thermal expansion of a cured resin film obtained by curing the soldering paste. Therefore, the isocyanurate ester can improve the heat resistance. Moreover, the isocyanurate ester can keep transparency of the cured resin film at a high level. In the trifunctional epoxy monomers represented by the general formula (1), particularly, tris-(2,3-epoxypropyl)-isocyanurate (TEPIC, softening point 120°C) represented by the following formula (1-1): 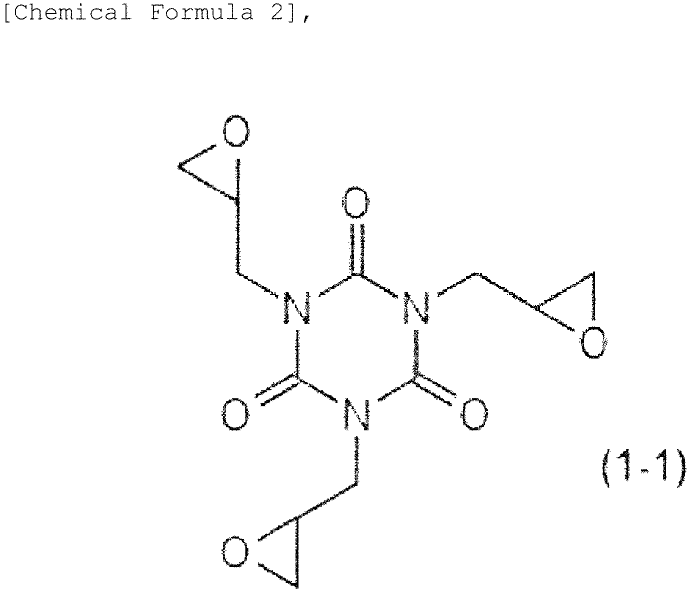 wherein R¹ and R² are both glycidyl group, is preferred.

Further, examples of the component B include tetrafunctional epoxy monomers (softening point 92°C) of a naphthalene type, which is represented by the following formula (2); phenol novolac type epoxy oligomers represented by the following formula (3); cresol novolac type epoxy oligomers represented by the following formula (4); dicyclopentadiene type epoxy oligomers represented by the following formula (5) ; and the like.

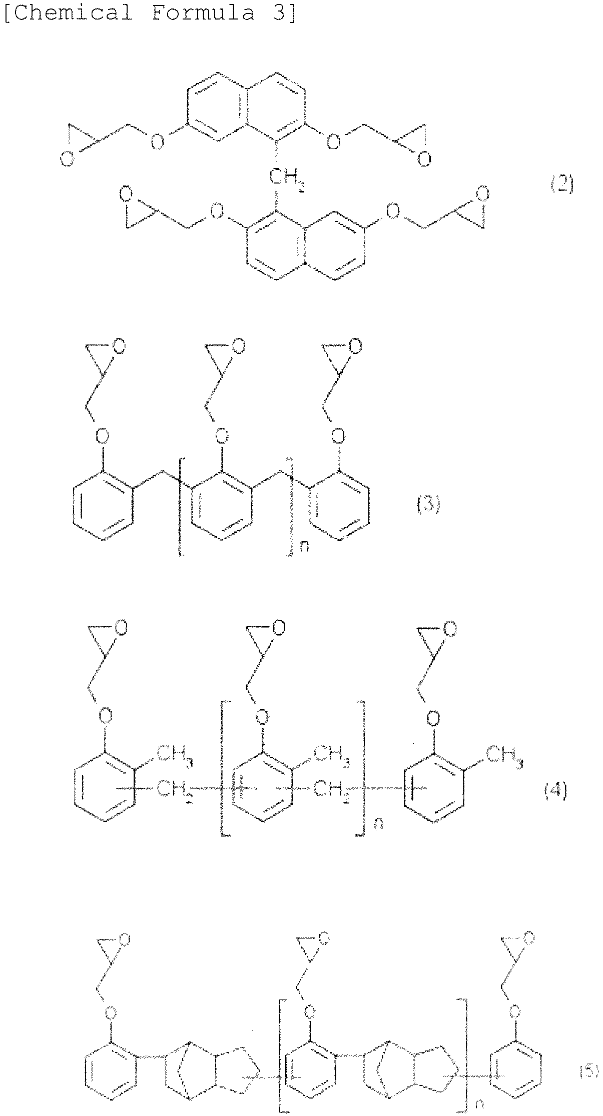

In the formulas (3) to (5), n represents an integer of 1 to 3, and is preferably 1 or 2.

The phenol novolac type epoxy oligomer represented by the formula (3) has a softening point of 80°C when the number n of a repeating unit is 2. The cresol novolac type epoxy oligomer represented by the above formula (4) has a softening point of 70°C when the number n of a repeating unit is 2. The dicyclopentadiene type epoxy oligomer represented by the above formula (5) has a softening point of 90°C when the number n of a repeating unit is 2.

The content of the component B is 5 to 50% by mass, and preferably 10 to 40% by mass with respect to the total solid contents of the soldering paste flux. When the content of the component B is set to 5 to 50% by mass, a cured resin layer with high crosslinking density can be obtained while the heating condition of the soldering paste is set to low temperatures and a short time. When the content of the component B is less than 5% by mass, a cured resin layer with high crosslinking density tends to be hardly formed when the heating condition is low temperatures or a short time. Conversely, when the content of the component B is more than 50% by mass, crosslinking of the component A tends to excessively progress, resulting in a reduction in workability of soldering paste.

The component C of the soldering paste flux promotes ring-opening of the epoxy group as a proton donor (Bronsted acid). Those having a melting point of 80 to 170°C are used as the component C. When a carboxylic acid having a melting point of lower than 80°C is used, the carboxylic acid is melted at relatively low temperatures, and therefore ring-opening of the epoxy compound is promoted even at low temperature. As a result, storage stability of soldering paste is poor due to increase in viscosity or curing thereof during storage. Moreover, if reactivity at low temperatures is increased, a curing reaction of a resin is promoted at temperature significantly lower than temperature at which a solder metal reaches a melting region, and this can interfere with melting or coalescence of the solder metal. On the other hand, when a carboxylic acid having a melting point higher than 170°C is used, ring-opening of the epoxy compound is promoted at temperature almost equal to or higher than the melting temperature of the solder metal. As a result, a resin is not adequately cured in a short time, or prolonged heating is required for completion of curing. Therefore, a cured resin layer with high crosslinking density tends to be hardly formed. The component C has a melting point of 80 to 170°C, and preferably 90 to 140°C.

Examples of the component C include glutaric acid (95°C), itaconic acid (167°C), citraconic acid (90°C), azelaic acid (98°C), 2,2-dimethylglutaric acid (85°C), phenylsuccinic acid (167°C), citric acid (100°C), dithioglycolic acid (135°C), 3,3-dimethylglutaric anhydride (125°C), 3,3-dimethylglutaric acid (100°C), succinic anhydride (120°C), phthalic anhydride (132°C), maleic acid (133°C), malonic acid (136°C), sorbic acid (135°C), phenylmalonic acid (153°C), benzylmalonic acid (118°C), and the like (melting point are shown in parentheses).

Among these, glutaric acid, itaconic acid, citraconic acid, azelaic acid, 2,2-dimethylglutaric acid, phenylsuccinic acid, citric acid, dithioglycolic acid, 3,3-dimethylglutaric anhydride, 3,3-dimethylglutaric acid, phenylmalonic acid and benzylmalonic acid are preferred, and glutaric acid is more preferred. As the component C, these compounds may be used alone, or may be used in combination of two or more thereof.

The content of the component C is 1 to 30% by mass, and preferably 10 to 25% by mass with respect to the total solid contents of the soldering paste flux. When the content of the component B is set to 1 to 30% by mass, crosslinking of the component A in heating the soldering paste can be moderately accelerated, and this makes it possible to achieve the effect of lowering heating temperature or shortening a heating time of the soldering paste. When the content of the component C is less than 1% by mass, the above-mentioned effect tends to be hardly achieved. Conversely, when the content of the component C is more than 30% by mass, crosslinking of the component A tends to excessively progress, resulting in a reduction in workability of the soldering paste.

The component D of the soldering paste flux is not particularly limited as long as the component D has two or more cyanato groups in a molecule, and publicly known various cyanate esters can be appropriately used. Among these esters, an cyanate ester having three or more cyanato groups in a molecule such as an oligomer of cyanate ester can prevent a crosslinking density from becoming too high in heating the soldering paste to set the crosslinking density within a moderate range. Accordingly, a situation that the cured resin layer becomes hard and brittle can be avoided, and impact resistance of the cured resin layer can be excellent. The component D is a component further having an aromatic ring in a molecule. The component D having an aromatic ring in a molecule imparts flexibility to the cured resin layer obtained by curing the soldering paste. As a result, it becomes possible to relieve the stress on the cured resin layer, and the occurrence of cracks is suppressed. In addition, when a cyanate ester having only one cyanato group in a molecule is used, the cured resin layer tends to be unable to be provided with adequate flexibility.

Examples of the component D include bisphenol E type cyanate esters such as 1,1-bis(4-cyanatophenyl)ethane represented by the following formula (6); bisphenol A type cyanate esters such as 2,2-bis(4-cyanatophenyl)propane represented by the following formula (7); bisphenol F type cyanate esters such as bis(4-cyanatophenyl)methane represented by the following formula (8) and bis(4-cyanato-3,5-dimethylphenyl)methane represented by the following formula (9); polycyanate esters such as poly(2,2-bis(4-cyanatophenyl)propane) represented by the following formula (10); and the like. In addition, poly(2,2-bis(4-cyanatophenyl)propane) is commercially available as the trade name "BA-230" from Lonza Group Ltd. (Switzerland).

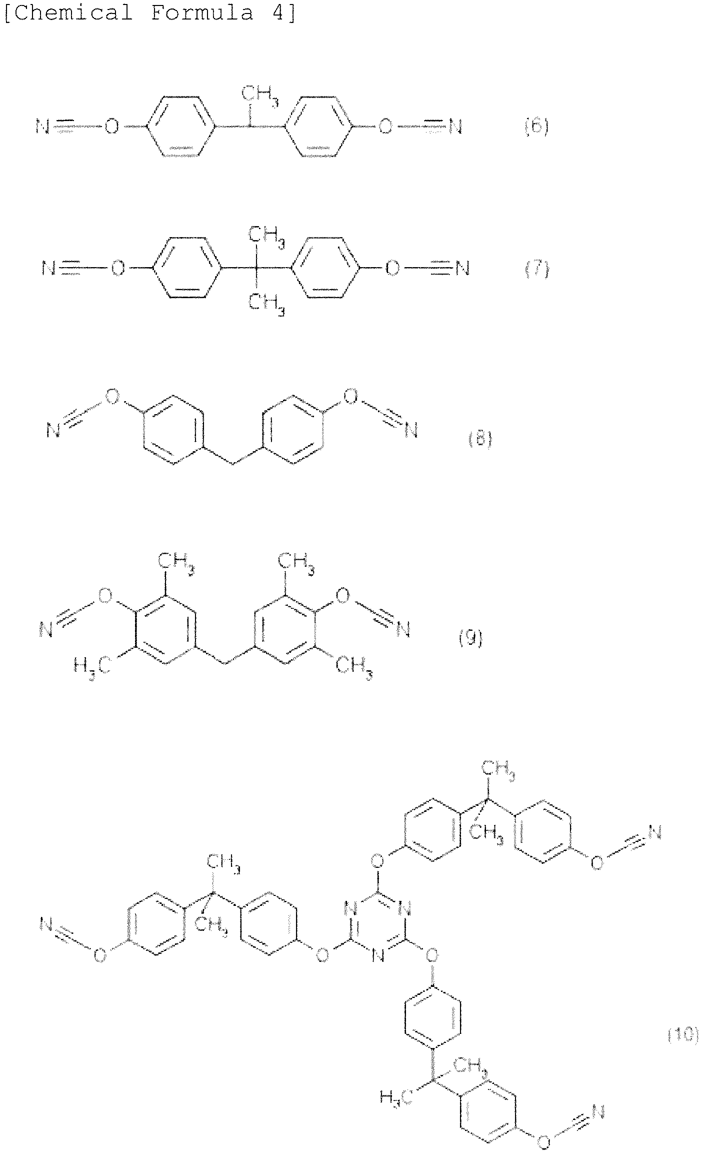

Among these components D, 1,1-bis(4-cyanatophenyl)ethane represented by the above formula (6); 2,2-bis(4-cyanatophenyl)propane represented by the above formula (7); and
poly(2,2-bis(4-cyanatophenyl)propane) represented by the above formula (10) are preferred, and
1,1-bis(4-cyanatophenyl)ethane and
poly(2,2-bis(4-cyanatophenyl)propane) are more preferred. As the component D, these compounds may be used alone, or may be used in combination of two or more thereof.

The content of the component D is 1 to 20% by mass, and more preferably 5 to 15% by mass with respect to the total solid contents of the soldering paste flux. When the content of the component D is set to 1 to 20% by mass, flexibility of the cured resin layer can be moderately set. When the content of the component D is less than 1% by mass, the cured resin layer tends to be hardly provided with adequate flexibility. Conversely, when the content of the component D is more than 20% by mass, the cured resin layer tends to become too flexible, resulting in a reduction in strength.

Examples of the component F of the soldering paste flux include organic solvents of alcohols such as terpineol, hexylene glycol, butyl carbitol, benzyl alcohol, isopalmityl alcohol, isostearyl alcohol and lauryl alcohol; esters such as diisobutyl adipate, diethyl phthalate and dibutyl phthalate; hydrocarbons such as hexadecane and dodecylbenzene; and the like. The content of the component F may be appropriately set, and is preferably set to 1 to 80% by mass with respect to the total amount of the soldering paste flux.

The soldering paste flux may further include other additives generally used in a soldering paste flux to such an extent that the effect of the present invention is not impaired. Examples of components of such additives include resins (rosins, acrylic resins, etc.) other than the above-mentioned thermosetting resins, activators (hydrohalic acid salt of amines such as ethyl amine and propyl amine; organic carboxylic acids such as lactic acid, citric acid and benzoic acid; etc.), thixotropy agents (hardened castor oil, bees wax, carnauba wax, etc.), solvents, and the like. In addition, the component C can also serve as an activator.

Also, other components such as an antioxidant, a rust preventive agent and a chelating agent may be further added to the soldering paste flux if necessary to such an extent that the effect of the present invention is not impaired, in addition to the above-mentioned components. The other components described above may also be added, for example, in mixing the flux and the solder alloy powder.

Next, a soldering paste of another aspect of the present invention will be described in detail.

An embodiment of the soldering paste includes a solder metal powder and the above soldering paste flux.

The solder metal powder used in the soldering paste is a low-temperature solder metal powder. In the present specification, "a low-temperature solder metal" refers to a solder metal having a melting point of 200°C or lower, and preferably 100°C to 200°C. Examples of the solder metal include a SnBi-type solder, a SnIn-type solder and the like, and particularly a SnBi-type solder is preferred. Specific examples of the SnBi-type solder metal include Sn-Bi, Sn-Bi-Ag and the like. Examples of particularly preferred composition of the solder metal include Sn-58Bi (Sn 42% by mass, Bi 58% by mass), Sn-57Bi-1Ag (Sn 42% by mass, Bi 57% by mass, Ag 1% by mass) and the like.

The particle diameter of the solder metal powder is not particularly limited, but is preferably 0.5 to 50 µm, more preferably 10 to 50 µm, and particularly preferably 25 to 45 µm. Further, the solder metal powder may be used alone, or may be used in combination of two or more thereof.

The soldering paste of the present invention usually includes the solder metal powder in an amount of 20 to 95% by mass, and particularly preferably in an amount of 80 to 90% by mass, and the rest of the soldering paste is other components.

The soldering paste of the present invention is principally used by being applied onto a substrate by screen printing, for example, in solder-connecting electronic components. After applying onto the substrate, the soldering paste is preheated, for example, at a temperature of about 150 to 200°C, and a reflow is performed at a maximum temperature of about 170 to 250°C. The application onto the substrate and the reflow may be performed in the atmosphere, or may be performed in an atmosphere of an inert gas such as nitrogen, argon or helium.

The soldering paste of the present invention has mutually contradictory characteristics of "storage stability" and "curing in a short time at low temperatures" due to the above-mentioned constitution, and the soldering paste cured after soldering exhibits excellent durability. Accordingly, the soldering paste of the present invention can be used, for example, for applications in which electronic components are mounted on circuit boards.

### EXAMPLES

Hereinafter, the present invention will be described specifically referring to Examples and Comparative Examples. However, the present invention is not intended to be limited to the examples.

### Example 1

### <Preparation of Soldering Paste Flux>

A soldering paste flux was prepared by charging the following components A to F into a stirred container and stirring/mixing these components at room temperature for 10 minutes. First, the contents of the components A to E are shown with respect to the total solid contents of the soldering paste flux, and subsequently the contents thereof are shown in brackets with respect to the total amount of the soldering paste flux. In addition, the component C also serves as an activator.
Component A: bisphenol A epoxy resin (trade name: YD-128, manufactured by Nippon Steel Chemical Co. , Ltd.), 71.1% by mass [64% by mass]
Component B: tris-(2,3-epoxypropyl)-isocyanurate (TEPIC), 11.1% by mass [10% by mass]
Component C: glutaric acid, 11.1% by mass [10% by mass]
Component D: 1,1-bis(4-cyanatophenyl)ethane, 5.56% by mass [5% by mass]
Component E: imidazole-type curing accelerator (trade name: "Curezol (registered trademark)" 2PHZ-PW (2-phenyl-4,5-dihydroxymethylimidazole, manufactured by SHIKOKU CHEMICALS CORPORATION), 1.11% by mass [1% by mass]
Component F: butyl carbitol acetate (BCA)

The content of the component F (dispersion medium) was adjusted to 10% by mass with respect to the total amount of the soldering paste flux.

### <Preparation of Soldering Paste>

A solder metal powder and the above-mentioned soldering paste flux were mixed in mass ratios of 88 : 12 to obtain a soldering paste. Mixing was carried out for 1 minute by using a conditioning mixer (manufactured by THINKY CORPORATION, AWATORI-RENTARO). In addition, as the solder metal powder, Sn-58Bi (alloy comprised of Sn and Bi in proportions of 42 : 58 by mass) was used.

### Examples 2 to 18

Soldering paste fluxes were respectively obtained in the same procedure as in Example 1 except for using the respective components illustrated in Table 1 in the amounts illustrated in Tables 1 to 4. Then, soldering pastes were respectively obtained in the same procedure as in Example 1 except for mixing the solder metal powders and the obtained soldering paste fluxes in mass ratios illustrated in Tables 1 to 4. In Examples 16 to 18, as the solder metal powders, Sn-57Bi-1Ag (alloy comprised of Sn, Bi and Ag in proportions of 42 : 57 : 1 by mass) was used.

### Comparative Examples 1 to 8

Soldering paste fluxes were respectively obtained in the same procedure as in Example 1 except for using the respective components illustrated in Table 5 in the amounts illustrated in Table 5. Then, soldering pastes were respectively obtained in the same procedure as in Example 1 except for mixing the solder metal powders and the obtained soldering paste fluxes in mass ratios illustrated in Table 5.

In addition, a soldering paste was prepared in the same procedure as in Example 1 except for without using the components B, C and D. This soldering paste is illustrated as a control in Table 5.

### (Evaluation)

Using the soldering pastes obtained in Examples 1 to 18 and Comparative Examples 1 to 8, storage stability, hardness, joint strength, and appearance of a cured resin layer were evaluated according the following methods.

### <Storage Stability>

The viscosity of the soldering paste immediately after preparation was measured by using Rheometer (manufactured by Anton Paar GmbH, MCR301). Then, the soldering paste was left standing at 25°C for 12 hours, and then the viscosity was measured again. A viscosity increase rate (25°C and 12 hours) was determined by dividing the viscosity after being left standing by the viscosity immediately after preparation to evaluate the storage stability of the soldering paste.

When the viscosity increase rate was 1.4 or less, the soldering paste was evaluated as suitable for a practical use from the viewpoint of storage stability. The evaluation criteria of the viscosity increase rate are as follows. The evaluation results of the storage stability of the soldering paste are illustrated in Tables 1 to 5.
A+ (quite good): 1.1 or less
A (good): larger than 1.1 and 1.2 or less
B (can be applied to a practical use): larger than 1.2 and 1.4 or less
C (defective): larger than 1.4

### <Hardness>

On a substrate (glass-epoxy substrate (FR-4)) was placed 0.5 g of a soldering paste. Then, the soldering paste was heated (peak temperature 180°C, retained for 30 seconds) with a hot plate in the atmosphere to be cured. After curing, a scratch hardness (pencil method) test was carried out in accordance with JIS K 5600-5-4 (Testing methods for paints -- Part 5: Mechanical property of film -- Section 4 : Scratch hardness (Pencil method)). In Examples 3, 12 and 13, the hardness of the case was also measured in a different heating condition for the soldering paste that the peak temperature was 160°C and the retention time was 30 seconds.

When the scratch hardness is harder than the class "H", the hardness of the cured resin layer was evaluated as suitable for a practical use. The evaluation criteria of the hardness are as follows. The evaluation results are illustrated in Tables 1 to 5.
A+ (quite good): equal to or harder than 5H
A (good): 4H to 2H
B (can be applied to a practical use): H
C (defective): equal to or softer than B

### <Joint Strength>

The above soldering paste was printed on a substrate for mounting a chip component, and then the component was mounted and heated/melted (reflow) to solder the chip component to the substrate. A glass-epoxy substrate (FR-4) provided with Cu electrodes thereon was used for the substrate. The soldering paste was heated in the atmosphere, and heating conditions was set such that the peak temperature was 180°C, and the retention time was 30 seconds. In Examples 3, 12 and 13, the joint strength of the case was also measured in a different heating condition that the peak temperature was 160°C, and the retention time was 30 seconds.

After the soldering paste was cured, the shear strength of the chip component was measured in accordance with JIS Z 3198-7 (Test methods for lead-free solders -- Part 7: Methods for shear strength of solder joints on chip components). The joint strength was determined by calculating an average value of 20 times measurements of a tensile load (N) at break of a solder joint, which was measured by using a strength measuring instrument (manufactured by Dage Japan Co., Ltd.: Bondtester Series 4000).

When the shear strength (tensile load) is 60N or more, the joint strength was evaluated as suitable for a practical use. The evaluation criteria of the joint strength are as follows. The evaluation results are illustrated in Tables 1 to 5.
A+ (quite good): 145 N or more
A (good): 130 N or more and less than 145 N
B (can be applied to a practical use): 60 N or more and less than 130 N
C (defective): less than 60 N

### <Appearance of Cured Resin Layer>

The samples used in the above-mentioned evaluation of joint strength were subjected to a cooling /heating cycle 1000 times. A cooling condition of the cooling/heating cycle was set to -40°C for 30 minutes, and a heating condition of the cooling/heating cycle was set to 120°C for 30 minutes. After the cooling/heating cycle, an appearance of the cured resin layer was visually observed.

When the evaluation result of visual observation is equal to or higher than the following rank B, the appearance of the cured resin layer was evaluated as suitable for a practical use (i.e., flexibility of the cured resin layer is appropriate, and durability is excellent). The evaluation results are illustrated in Tables 1 to 5.
A+ (quite good) :No crack was observed at all in the cured resin layer.
A (good) : Although a few cracks were observed in the cured resin layer, the level was such that the cracks could not be recognized without careful observation.
B (can be applied to a practical use): Visually recognizable cracks were produced in the cured resin layer, but the cracks were fine and there was no harm to a practical use.
C (defective): Cracks were remarkably produced, and the soldering paste was incapable of meeting a practical use.

**Table 1**

| | Soldering paste (Solder metal : Sn-58Bi) | | | | | | | Evaluation results | | | |
|---|---|---|---|---|---|---|---|---|---|---|---|
| | Soldering paste flux | | | | | | Mass ratio of solder metal and resin mixture | Storage stability (Evaluation) | Hardness (Evaluation) | Joint strength | Appearance of a cured resin layer |
| | Solid content | | | | | Component F (Dispersion medium) | | | | | |
| | Component A | Component E | Component B : | Component C : | Component D | | | | | | |
| Example 1 | A-1 71.1 [64] | E-1 1.11 [1] | B-1 11.1 [10] | Glutaric acid 11.1 [10] | D-1 5.56 [5] | BCA [10] | 88:12 | 1.0 (A+) | 3H (A) | 144N (A) | A |
| Example 2 | A-1 26.7 [24] | E-1 1.11 [1] | B-1 38.9 [35] | Glutaric acid 22.2 [20] | D-1 11.1 [10] | BCA [10] | 88:12 | 1.2 (A) | 6H (A+) | 158N (A+) | A |
| Example 3 | A-1 37.8 [34] | E-1 1.11 [1] | B-1 33.3 [30] | Glutaric acid 16.7 [15] | D-1 11.1 [10] | BCA [10] | 88:12 | 1.1 (A+) | 6H (A+) | 155N (A+) | A |
| Example 4 | A-1 43.3 [39] | E-1 1.11 [1] | B-2 38.9 [35] | Glutaric acid 11.1 [10] | D-1 5.56 [5] | BCA [10] | 88:12 | 1.0 (A+) | 2H (A) | 156N (A+) | A |
| Example 5 | A-1 48.9 [44] | E-1 1.11 [1] | B-2 11.1 [10] | Glutaric acid 22.2 [20] | D-1 16.7 [15] | BCA [10] | 88:12 | 1.2 (A) | 4H (A) | 139N (A) | A |
| Example 6 | A-1 71.1 [64] | E-1 1.11 [1] | B-1 11.1 [10] | Glutaric acid 11.1 [10] | D-2 5.56 [5] | BCA [10] | 88:12 | 1.0 (A+) | 3H (A) | 132N (A) | A |
| Example 7 | A-1 37.8 [34] | E-1 1.11 [1] | B-1 27.8 [25] | Glutaric acid 22.2 [20] | D-2 11.1 [10] | BCA [10] | 88:12 | 1.2 (A) | 6H (A+) | 152N (A+) | A |
| Example 8 | A-1 43.3 [39] ' | E-1 1.11 [1] | B-1 33.3 [30] | Glutaric acid 11.1 [10] | D-2 11.1 [10] | BCA [10] | 88:12 | 1.0 (A+) | 3H (A) | 141N (A) | A |

| | | | | | | | | | | | |
|---|---|---|---|---|---|---|---|---|---|---|---|
| The content (% by mass) of components A to E with respect to the total solid contents of soldering paste flux are indicated in each column of the components A to E. The numbers indicated in brackets of each column of the components A to F are the contents (% by mass) with respect to the total amount of soldering paste flux. A-1 in the component A is bisphenol A epoxy resin (trade name: YD-128, manufactured by Nippon Steel Chemical Co., Ltd.). E-1 in the component E is imidazole-type curing accelerator (trade name: "Curezol (registered trademark)" 2PHZ-PW, manufactured by SHIKOKU CHEMICALS CORPORATION). In the component B, B-1 is TEPIC (formula 1-1, softening point 120°C) and B-2 is naphthalene type tetrafunctional epoxy monomers (formula 2, softening point 92°C). In the component D, D-1 is 1,1-bis(4-cyanatophenyl)ethane (formula 6), and D-2 is 2,2-bis(4-cyanatophenyl)propane (formula 7). BCA in the component F is butyl carbitol acetate. The heating condition for soldering is that peak temperature is 180°C and retention time is 30 seconds. | | | | | | | | | | | |

**Table 2**

| | Soldering paste (Solder metal: Sn-58Bi) | | | | | | | Evaluation results | | | |
|---|---|---|---|---|---|---|---|---|---|---|---|
| | Soldering paste flux | | | | | | Mass ratio of solder metal and resin mixture | Storage stability (Evaluation) | Hardness (Evaluation) | Joint strength (Evaluation) | Appearance of a cured resin layer |
| | Solid content | | | | | Component F (Dispersion medium) | | | | | |
| | Component A | Component | Component B | Component C | Component D | | | | | | |
| Example 9 | A-1 71.1 [64] | E-1 1.11 [1] | B-1 11.1 [10] | Glutaric acid 11.1 [10] | D-3 5.56 [5] | BCA [10] | 88:12 | 1.0 (A+) | 3H (A) | 154N (A+) | A |
| Example 10 | A-1 37.8 [34] | E-1 1.11 [1] | B-1 27.8 [25] | Glutaric acid 22.2 [20] | D-3 11.1 [10] | BCA [10] | 88:12 | 1.2 (A) | 6H (A+) | 156N (A+) | A |
| Example 11 | A-1 43.3 [39] | E-1 1.11 [1] | B-1 33.3 [30] | Glutaric acid 11.1 [10] | D-3 11.1 [10] | BCA [10] | 88:12 | 1.0 (A+) | 6H (A+) | 161N (A+) | A |

| | | | | | | | | | | | |
|---|---|---|---|---|---|---|---|---|---|---|---|
| The content (% by mass) of components A to E with respect to the total solid contents of soldering paste flux are indicated in each column of the components A to E. The numbers indicated in brackets of each column of the components A to F are the contents (% by mass) with respect to the total amount of soldering paste flux. A-1 in the component A is bisphenol A epoxy resin (trade name: YD-128, manufactured by Nippon Steel Chemical Co., Ltd.). E-1 in the component E is imidazole-type curing accelerator (trade name: "Curezol (registered trademark)" 2PHZ-PW, manufactured by SHIKOKU CHEMICALS CORPORATION). B-1in the component B is TEPIC(formula 1-1, softening point 120°C). D-3 in the component D is poly(2,2-bis(4-cyanatophenyl)propane) (formula 10). BCA in the component F is butyl carbitol acetate. The heating condition for soldering is that peak temperature is 180°C and retention time is 30 seconds. | | | | | | | | | | | |

**Table 3**

| | Soldering paste (Solder metal: Sn-58Bi) | | | | | | | Heating condition for soldering Peak temperature Retention time | Evaluation results | | | |
|---|---|---|---|---|---|---|---|---|---|---|---|---|
| | Soldering paste flux | | | | | | Mass ratio of solder metal and resin mixture | | Storage stability (Evaluation) | Hardness (Evaluation) | Joint strength (Evaluation) | Appearance of a cured resin layer |
| | Solid content | | | | | Component F (Dispersion medium) | | | | | | |
| | Component A | Component E | Component B | Component C | Component D | | | | | | | |
| Example 3 | A-1 37.8 [34] | E-1 1.11 [1] | B-1 33.3 [30] | Glutaric acid 16.7 [15] | D-1 11.1 [10] | BCA [10] | 88:12 | 180°C 30 seconds | 1.1 (A+) | 6H (A+) | 155N (A+) | A |
| | | | | | | | | 160°C 30 seconds | | 5H (A+) | 141N (A) | A |
| Example 12 | A-1 76.7 [69] | E-1 1.11 [1] | B-1 5.56 [5] | Itaconic acid 11.1 [10] | D-1 5.56 [5] | BCA [10] | 88:12 | 180°C 30 seconds | 1.0 (A+) | 2H (A) | 131N (A) | A |
| | | | | | | | | 160°C 30 seconds | | H (B) | 121N (B) | A |
| Example 13 | A-1 43.3 [39] | E-1 1.11 [1] ' | B-1 16.7 [15] | Itaconic acid 22.2 [20] | D-1 16.7 [15] | BCA [10] | 88:12 | 180°C 30 seconds | 1.4 (B) | 4H (A) | 141N (A) | A |
| | | | | | | | | 160°C 30 seconds | | H (B) | 126N (B) | A |
| Example 14 | A-1 65.6 [59] | E-1 1.11 [1] | B-1 16.7 [15] | Citric acid 11.1 [10] | D-1 5.56 [5] | BCA [10] | 88:12 | 180°C 30 seconds | 1.2 (A) | 3H (A) | 151N (A+) | A |
| Example 15 | A-1 60.0 [54] | E-1 1.11 [1] | B-1 5.56 [5] | Citric acid 22.2 [20] | D-1 11.1 [10] | BCA [10] | 88:12 | 180°C 30 seconds | 1.25 (B) | 5H (A+) | 133N (A) | A |

| | | | | | | | | | | | | |
|---|---|---|---|---|---|---|---|---|---|---|---|---|
| The content (% by mass) of components A to E with respect to the total solid contents of soldering paste flux are indicated in each column of the components A to E. The numbers indicated in brackets of each column of the components A to F are the contents (% by mass) with respect to the total amount of soldering paste flux. A-1 in the component A is bisphenol A epoxy resin (trade name: YD-128, manufactured by Nippon Steel Chemical Co., Ltd.). E-1 in the component E is imidazole-type curing accelerator (trade name: "Curezol (registered trademark)" 2PHZ-PW, manufactured by SHIKOKU CHEMICALS CORPORATION). B-1 in the component B is TEPIC(formula 1-1, softening point 120°C). In regard to melting points of the component C, glutaric acid is 95°C, itaconic acid is 167°C, and citric acid is 100°C. D-1 in the component D is 1.1-bis(4-cyanatophenyl)ethane (formula 6). BCA in the component F is butyl carbitol acetate. | | | | | | | | | | | | |

**Table 4**

| | Soldering paste (Solder metal: Sn-57Bi-1Ag) | | | | | | | Evaluation results | | | |
|---|---|---|---|---|---|---|---|---|---|---|---|
| | Soldering paste flux | | | | | | Mass ratio of solder metal and resin mixture | Storage stability (Evaluation) | Hardness (Evaluation) | Joint strength (Evaluation) | Appearance of resin layer |
| | Solid content | | | | | Component F (Dispersion medium) | | | | | |
| | Component A | Component E | Component B | Component C | Component | | | | | | |
| Example 16 | A-1 65.6 [59] | E-1 1.11 [1] | B-1 11.1 [10] | Glutaric acid 11.1 [10] | D-1 11.1 [10] | BCA [10] | 88:12 | 1.0 (A+) | 3H (A) | 141N (A) | A |
| Example 17 | A-1 26.7 [24] | E-1 1.11 [1] | B-1 33.3 [30] | Glutaric acid 22.2 [20] | D-1 16.7 [15] | BCA [10] | 88:12 | 1.2 (A) | 6H (A+) | 168N (A+) | A |
| Example 18 | A-1 37.8 [34] | E-1 1.11 [1] | B-1 38.9 [35] | Glutaric acid 11.1 [10] | D-1 11.1 [10] | BCA [10] | 88:12 | 1.1 (A+) | 6H (A+) | 153N (A+) | A |

| | | | | | | | | | | | |
|---|---|---|---|---|---|---|---|---|---|---|---|
| The content (% by mass) of components A to E with respect to the total solid contents of soldering paste flux are indicated in each column of the components A to E. The numbers indicated in brackets of each column of the components A to F are the contents (% by mass) with respect to the total amount of soldering paste flux. A-1 in the component A is bisphenol A epoxy resin (trade name: YD-128, manufactured by Nippon Steel Chemical Co., Ltd.). E-1 in the component E is imidazole-type curing accelerator (trade name: "Curezol (registered trademark)" 2PHZ-PW, manufactured by SHIKOKU CHEMICALS CORPORATION). B-1 in the component 8 is TEPIC (formula 1-1, softening point 120°C). D-1 in the component D is 1,1-bis(4-cyanatophenyl)ethane (formula 6). BCA in the component F is butyl carbitol acetate. The heating condition for soldering is that peak temperature is 180°C and retention time is 30 seconds. | | | | | | | | | | | |

**Table 5**

| | Soldering paste (Solder metal: Sn-58Bi) | | | | | | | Evaluation results | | | |
|---|---|---|---|---|---|---|---|---|---|---|---|
| | Soldering paste flux | | | | | | Mass ratio of solder metal and resin mixture | Storage stability (Evaluation) | Hardness (Evaluation) | Joint strength (Evaluation) | Appearance of a cured resin layer |
| | Solid content | | | | | Component F (Dispersion medium) | | | | | |
| | Component A | Component E | Component B | Component C | Component D | | | | | | |
| Control | A-1 98.9 [89] | E-1 1.11 [1] | - | - | - | BCA [10] | 88:12 | 1.0 (A+) | 6B (C) | 30N (C) | A |
| Comparative Example 1 | A-1 87.8 [79] | E-1 1.11 [1] | B-1 11.1 [10] | - | - | BCA [10] | 88:12 | 1.0 (A+) | 6B (C) | 35N (C) | C |
| Comparative Example 2 | A-1 71.1 [64] | E-1 1.11 [1] | - | Glutaric acid 16.7 [15] | D-1 11.1 [10] | BCA [10] | 88:12 | 1.1 (A+) | B (C) | 52N (C) | A |
| Comparative Example 3 | A-1 76.7 [69] | E-1 1.11 [1] | B-1 11.1 [10] | - | D-1 11.1 [10] | BCA [10] | 88:12 | 1.0 (A+) | 6B (C) | 48N (C) | C |
| Comparative Example 4 | A-1 71.1 [64] | E-1 1.11 [1] | B-1 11.1 [10] | Glutaric acid 16.7 [15] | - | BCA [10] | 88:12 | 1.1 (A+) | 3H (A) | 135N (A) | C |
| Comparative Example 5 | A-1 78.9 [71] | E-1 1.11 [1] | B-1 3.33 [3] | Glutaric acid 16.7 [15] | - | BCA [10] | 88:12 | 1.1 (A+) | 2H (A) | 103N (B) | C |
| Comparative Example 6 | A-1 37.8 [34] | E-1 1.11 [1] | B-1 44.4 [40] | Glutaric acid 16.7 [15] | - | BCA [10] | 88:12 | 1.1 (A+) | 4H (A) | 145N (A+) | C |
| Comparative Example 7 | A-1 15.6 [14] | E-1 1.11 [1] | B-1 ; 55.6 [50] | Acetic acid 16.7 [15] | D-1 11.1 [10] | BCA [10] | 88:12 | 1.5 (C) | 3H (A) | 132N (A) | C |
| Comparative Example 8 | A-1 60.0 [54] | E-1 1.11 [1] | B-1 11.1 [10] | Fumaric acid 16.7 [15] | D-1 11.1 [10] | BCA [10] | 88:12 | 1.1 (A+) | B (C) | 46N (C) | A |

| | | | | | | | | | | | |
|---|---|---|---|---|---|---|---|---|---|---|---|
| The content (% by mass) of components A to E with respect to the total solid contents of soldering paste flux are indicated in each column of the components A to E. The numbers indicated in brackets of each column of the components A to F are the contents (% by mass) with respect to the total amount of soldering paste flux. A-1 in the component A is bisphenol A epoxy resin (trade name: YD-128, manufactured by Nippon Steel Chemical Co., Ltd.). E-1 in the component E is imidazole-type curing accelerator (trade name: "Curezol) (registered trademark))" 2PHZ-PW, manufactured by SHIKOKU CHEMICALS CORPORATION). B-1 in the component B is TEPIC(formula 1-1, softening point 120°C). In regard to melting points of the component C, glutaric acid is 95°C, acetic acid is 17°C, and fumaric acid is 200°C. D-1 in the component D is 1,1-bis(4-cyanatophenyl)ethane (formula 6). BCA in the component F is butyl carbitol acetate. The heating condition for soldering is that peak temperature is 180°C and retention time is 30 seconds. | | | | | | | | | | | |

As illustrated in Tables 1 to 4, it is found that the soldering pastes obtained by using the fluxes of Examples 1 to 18 have excellent storage stability, and exhibit high hardness when being cured. Moreover, it is found that when the electronic components are connected by the use of the soldering pastes obtained in Examples 1 to 18, the joint strength is high, cracks are hardly produced in the cured resin layer, and durability is excellent.

On the other hand, as illustrated in Table 5, it is found that the soldering pastes obtained by using the fluxes of Comparative Examples 1 to 8 (i.e., soldering pastes obtained by using the fluxes lacking at least one of the components A, B, C and D) are poor in at least one of storage stability, hardness, joint strength and an appearance of a cured resin layer, and these are not practical.

## Claims

1. A soldering paste flux, comprising (A) a thermosetting prepolymer containing a bifunctional epoxy prepolymer, (B) a polyfunctional epoxy monomer or oligomer having three or more functional groups in a molecule, (C) a carboxylic acid having a melting point of 80 to 170°C, (D) a cyanate ester having an aromatic ring and two or more cyanato groups in a molecule, (E) a curing agent, and (F) a dispersion medium,
wherein at least one of the three or more functional groups in the (B) polyfunctional epoxy monomer or oligomer is a glycidyl group,
wherein the content of the (B) polyfunctional epoxy monomer or oligomer is 5 to 50% by mass with respect to the total solid contents of the soldering paste flux,
wherein the content of the (C) carboxylic acid is 1 to 30% by mass with respect to the total solid contents of the soldering paste flux, and
wherein the content of the (D) cyanate ester is 1 to 20% by mass with respect to the total solid contents of the soldering paste flux.

2. The soldering paste flux according to claim 1,
wherein the (B) polyfunctional epoxy monomer or oligomer having three or more functional groups in a molecule has a softening point of 70 to 125°C.

3. The soldering paste flux according to claim 2,
wherein the polyfunctional epoxy monomer having three or more functional groups in a molecule is tris-(2,3-epoxypropyl)isocyanurate.

4. The soldering paste flux according to any one of claims 1 to 3, wherein the (C) carboxylic acid has a melting point of 90 to 140°C.

5. A soldering paste comprising a solder metal powder and the soldering paste flux according to any one of claims 1 to 4,
wherein the solder metal powder is a low-temperature solder metal powder having a melting point of 200°C or lower, and
wherein the content of the solder metal powder is 20 to 95% by mass in the soldering paste.

## Patentansprüche

1. Lötpastenflussmittel, umfassend (A) ein wärmehärtendes Präpolymer, das ein bifunktionelles Epoxypräpolymer enthält, (B) ein polyfunktionelles Epoxymonomer oder -oligomer mit drei oder mehr funktionellen Gruppen in einem Molekül, (C) eine Carbonsäure mit einem Schmelzpunkt von 80 bis 170°C, (D) einen Cyanatester mit einem aromatischen Ring und zwei oder mehr Cyanatogruppen in einem Molekül, (E) ein Härtungsmittel und (F) ein Dispersionsmedium,
wobei zumindest eine der drei oder mehr funktionellen Gruppen in dem polyfunktionellen Epoxymonomer oder -oligomer (B) eine Glycidylgruppe ist,
wobei der Gehalt an polyfunktionellem Epoxymonomer oder -oligomer (B) 5 bis 50 Masse-%, bezogen auf den Gesamtfeststoffgehalt des Lötpastenflussmittels, beträgt
wobei der Gehalt an Carbonsäure (C) 1 bis 30 Masse-%, bezogen auf den Gesamtfeststoffgehalt des Lötpastenflussmittels, beträgt und
wobei der Gehalt an Cyanatester (D) 1 bis 20 Masse-%, bezogen auf den Gesamtfeststoffgehalt des Lötpastenflussmittels, beträgt.

2. Lötpastenflussmittel gemäss Anspruch 1, wobei das polyfunktionelle Epoxymonomer oder -oligomer (B) mit drei oder mehr funktionellen Gruppen in einem Molekül einen Erweichungspunkt von 70 bis 125°C aufweist.

3. Lötpastenflussmittel gemäss Anspruch 2, wobei das polyfunktionelle Epoxymonomer mit drei oder mehr funktionellen Gruppen in einem Molekül Tris-(2,3-epoxypropyl)isocyanurat ist.

4. Lötpastenflussmittel gemäss irgendeinem der Ansprüche 1 bis 3, wobei die Carbonsäure (C) einen Schmelzpunkt von 90 bis 140°C aufweist.

5. Lötpaste, umfassend ein Lötmetallpulver und ein Lötpastenflussmittel gemäss irgendeinem der Ansprüche 1 bis 4,
wobei das Lötmetallpulver ein Niedertemperatur-Lötmetallpulver mit einem Schmelzpunkt von 200°C oder niedriger ist, und
wobei der Gehalt an Lötmetallpulver 20 bis 95 Masse-% in der Lötpaste beträgt.

## Revendications

1. Flux de pâte de soudure, comprenant (A) un prépolymère thermodurcissable contenant un prépolymère époxy bifonctionnel, (B) un monomère ou un oligomère époxy polyfonctionnel ayant trois groupes fonctionnels ou plus dans une molécule, (C) un acide carboxylique ayant un point de fusion de 80 à 170 °C, (D) un ester de cyanate ayant un cycle aromatique et deux groupes cyanato ou plus dans une molécule, (E) un agent de traitement et (F) un milieu de dispersion,
dans lequel au moins l'un des trois groupes fonctionnels ou plus dans le (B) monomère ou oligomère époxy polyfonctionnel est un groupe glycidyle,
dans lequel la teneur en (B) monomère ou oligomère époxy polyfonctionnel est de 5 à 50 % en masse par rapport à la teneur totale en matières solides du flux de pâte de soudure,
dans lequel la teneur en (C) acide carboxylique est de 1 à 30 % en masse par rapport à la teneur totale en matières solides du flux de pâte de soudure, et
dans lequel la teneur en (D) ester de cyanate est de 1 à 20 % en masse par rapport à la teneur totale en matières solides du flux de pâte de soudure.

2. Flux de pâte de soudure selon la revendication 1, dans lequel le (B) monomère ou oligomère époxy polyfonctionnel ayant trois groupes fonctionnels ou plus dans une molécule a un point de ramollissement de 70 à 125 °C.

3. Flux de pâte de soudure selon la revendication 2, dans lequel le monomère époxy polyfonctionnel ayant trois groupes fonctionnels ou plus dans une molécule est du tris-(2,3-époxypropyl)isocyanurate.

4. Flux de pâte de soudure selon l'une quelconque des revendications 1 à 3, dans lequel le (C) acide carboxylique a un point de fusion de 90 à 140 °C.

5. Pâte de soudure comprenant une poudre de métal de soudure et un flux de pâte de soudure selon l'une quelconque des revendications 1 à 4,
dans lequel la poudre de métal de soudure est une poudre de métal de soudure basse température ayant un point de fusion de 200 °C ou inférieur, et
dans lequel la teneur en poudre de métal de soudure est de 20 à 95 % en masse dans la pâte de soudure.
